# EUROPÄISCHE PATENTANMELDUNG

(11) **EP 1 035 607 A2**
(43) Veröffentlichungstag der Anmeldung: **13.09.2000**
(21) Anmeldenummer: 00101765.6
(22) Anmeldetag: 28.01.2000
(51) Int. Cl.: H01M 8/02

(54) **Verfahren und Werkzeug zur Herstellung von Bipolarplatten**

(30) Priorität: 10.03.1999 DE 19910487
(71) Anmelder: Firma Carl Freudenberg, 69469 Weinheim (DE)
(72) Erfinder: Schilling, Hermann, Dr., 69469 Weinheim (DE); Hofmann, Günter, 68526 Ladenburg (DE); Bock, Eberhard, Dr., 69509 Mörlenbach (DE)

(57) **Zusammenfassung**

Verfahren und Werkzeug zur Herstellung von Bipolarplatten mit Flüssigkeits- und Gaskanälen und mit Dichtelementen aus polymerem Material für Brennstoffzellen, wobei das Prägen der Bipolarplatten (4) bzw. das Einprägen der Ftüssigkeits- und Gaskanäle (5) in die Bipolarplatten (4) und die Anbringung der Dichtelemente (12) an den Bipolarplatten (4) in einem Werkzeug (1) in zwei unmittelbar aufeinanderfolgenden Schriften durchgeführt wird.

## Beschreibung

### Technisches Gebiet

Elektrochemische Brennstoffzellen gewinnen zunehmend an Bedeutung. Sie bestehen im wesentlichen aus zwei Trennplatten, sogenannten Bipolarplatten, zwischen denen eine lonen-Austauschmembrane angeordnet ist. Die Platten sind mit Kanälen für Gase und Flüssigkeiten ausgestattet und überwiegend aus Graphit oder Metall hergestellt. Die Herstellungsverfahren sind relativ aufwendig, da beim Zusammenbau der Platten eine hohe Dichtigkeit gefordert wird, damit die Reaktions- und Kühlmedien während des Betriebs der Brennstoffzelle voneinander getrennt bleiben.

### Stand der Technik

In der PCT-Anmeldung WO 93/06627 wird eine Brennstoffzelle in ihrem Aufbau ausführlich behandelt. Die Trennplatten sind aus Graphit. Nähere Hinweise wie diese Trennplatten gefertigt worden sind, sind der Veröffentlichung jedoch nicht zu entnehmen. Auch werden keine näheren Angaben bezüglich der Abdichtungen zwischen den einzelnen gas- bzw. flüssigkeitführenden Kanälen gemacht. Es wird lediglich angemerkt, daß die Peripherie der einzelnen Platten mit einer Abdichtung versehen ist.

In der europäischen Patentanmeldung EP 0 604 683 wird auf ein bisher übliches Verfahren zur Herstellung einer Brennstoffzelle verwiesen, bei dem Trennplatten aus Graphit eingesetzt werden und ein Dichtungsmaterial aus Silikon, Gummi oder extrudierbarem elastomeren Material vorgeschlagen wird. In die mechanisch eingebrachten Nuten in der Trennplatte wird das Dichtmaterial vor dem Zusammenfügen der Platten injiziert. Ausführungen zum Injiziervorgang sind der Veröffentlichung jedoch nicht zu entnehmen.

Allgemein bekannt ist, die Trennplatten und die Dichtungen separat herzustellen und in einem darauffolgenden Schrift die Dichtungen einzeln in die vorgegebenen Nuten in die Trennplatten einzukleben. Dieser Vorgang ist zeitaufwendig, schwer zu beherrschen und birgt die Gefahr von Produktionsfehlern in sich. Um dieses zu vermeiden ist auch bereits vorgeschlagen worden, siehe europäische Patentanmeldung EP 0 774 794, die Trennplatte aus einem elastischen, plastisch verformbaren Material herzustellen und mit integrierten Erhebungen zu versehen, welche gleichzeitig als Dichtungen verwendet werden können. Solche Platten können in einem Prägevorgang hergestellt werden, wobei das verwendete Prägewerkzeug entsprechende Erhebungen zur Ausbildung der Gas- bzw. Flüssigkeitskanäle und entsprechende Vertiefungen zur Ausbildung der Dichtungsanordnung ausweisen muß. Hier wird zwar in einem Arbeitsvorgang die Trennplatte und die Dichtung hergestellt, jedoch mit dem Nachteil, daß beide aus dem gleichen Material bestehen und somit in ihrer Dichtfunktion eingeschränkt sind.

Der Erfindung liegt die Aufgabe zugrunde, ein Verfahren und ein Werkzeug für die Erstellung von Bipolarplatten zu entwickeln, welches einfach in seiner Durchführung ist und ein schnelles und sicheres Anbinden der Dichtung an die Bipolarplatte erlaubt. Damit soll auch eine einfache und schnelle Montage der Brennstoffzelle ermöglicht werden. Das Verfahren soll sowohl bei Bipolarplatten aus Edelstahlblech als auch aus Graphit anwendbar sein.

### Darstellung der Erfindung

Die Lösung der gestellten Aufgabe wird bei einem Verfahren zur Herstellung von Bipolarplatten mit Flüssigkeits- und Gaskanälen und mit Dichtelementen aus polymeren Material für Brennstoffzellen erfindungsgemäß dadurch erreicht, daß das Prägen der Bipolarplatten bzw. das Einprägen der Flüssigkeits- und Gaskanäle in die Bipolarplatten und die Anbringung der Dichtelemente an den Bipolarplatten in einem Werkzeug mit zwei unmittelbar aufeinanderfolgenden Schriften durchgeführt wird. Es wird folglich ein Werkzeug verwendet, welches sowohl für das Einprägen der Kanäle wie auch der Nuten als auch für das Anbringen der Dichtelemente benutzt wird.

Nach diesem Verfahren ist es möglich, die Dichtelemente an die Bipolarplatten anzuspritzen. Möglich ist aber auch die Dichtelemente im Pressverfahren mit den Bipolarplatten zu verbinden. Die Befestigung der Dichtelemente an die dafür vorgesehenen Stellen an den Bipolarplatten kann direkt auf den ebenen Flächen der Bipolarplatten erfolgen. Günstig ist aber, die Bipolarplatten mit Nuten für die Dichtelemente zu versehen. Sofern die Bipolarplatten mit Nuten für die Dichtelemente ausgestattet werden sollen, ist es günstig, wenn die sich gegenüberliegenden Nuten seitlich versetzt zueinander angebracht sind. Auf diese Weise kann beim Einbringen bzw. Befestigen der Dichtelemente in der Nut in sehr günstiger Weise ein Gegendruck aufgebaut werden. Dieses schließt aber nicht aus, daß die auf einer Bipolarplatte auf ihren beiden Seiten angebrachten und sich gegenüberliegenden Nuten fluchtend zueinander angebracht werden können.

Das Werkzeug zur Durchführung des Verfahrens wird als kombiniertes Präge- und Spritzgießwerkzeug oder Preßwerkzeug ausgebildet. Mit dem Werkzeug wird zunächst der Prägevorgang durchgeführt, wobei es zwei Möglichkeiten gibt. Für den Fall, daß die Bipolarplatte aus einem Edelstahlblech besteht, werden in das flache Blech die entsprechenden Kanälen und Nuten eingeprägt. Bei Bipolarplatten aus Graphit wird das Graphitmaterial einer Komprimierung unterzogen und während dieses Vorgangs die entsprechenden Kanäle und Nuten hergestellt. Das Werkzeug ist in den an den Bipolarplatten vorgesehenen Nutbereichen mit gesonderten Stempeln versehen, die nach dem Prägevorgang den Raum für die einzubringende Dichtung freigeben. Sofern das Spritzgießverfahren vorgesehen ist, werden die Stempel nur soweit zurückgefahren, daß sie den für die Dichtung benötigten Raum freigeben. Sie stellen dadurch die Begrenzung für die Dichtfläche des Dichtelements dar. Möglich ist auch, in das Werkzeug eingelegte Stempel zu verwenden, die vor dem Spritzgießen herausgenommen werden. Nachdem der Spritzgiessvorgang beendet ist, wird das Werkzeug geöffnet und die mit den Dichtungen versehene Platte entnommen.

Möglich ist aber auch, die Stempel für den Präge- und auch für einen Preßvorgang zu benutzen. In diesem Fall wird mit dem Werkzeug zunächst die Bipolarplatte mit den entsprechenden Kanälen und Nuten hergestellt. Sodann werden die Stempel aus dem Werkzeug völlig herausgefahren und in den entstandenen Raum in die Nuten ein vorgefertigter Dichtungsrohling eingelegt. Danach fahren die Stempel wieder zurück und pressen die Dichtung an die Bipolarplatte an. Bei Dichtungen aus Elastomeren oder Silikon kann der Vorgang durch Zufuhr von Wärme unterstützt werden, so daß ein Heißvulkanisiervorgang durchgeführt werden kann. Bei Dichtungen aus thermoplastisch verarbeitbaren Materialien erfolgt die Verfestigung durch Erstarren nach Wärmeentzug. Eine weitere Alternative hierzu besteht darin, daß die Nutenstempel gesonderte Stempel sind, die nach dem Prägevorgang herausgenommen werden. Danach wird der Dichtungsrohling in die Nuten eingelegt und durch Schließen der Form ein 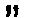 compression molding" durchgeführt.

Um bei den hohen Drücken, die insbesondere beim Preßvorgang auftreten, die Platten nicht zu beschädigen, ist es günstig, wenn die sich gegenüberliegenden Stempel des Werkzeugs für den Spritzvorgang zeitlich nacheinander betätigt werden. Auf diese Weise kann zunächst auf einer Seite der Platte die Dichtung aufgebracht werden, während von der anderen Seite der in seiner ursprünglichen Lage verharrende Stempel einen Gegendruck auf die Bipolarplatte ausübt. Nachdem auf der einen Seite der Platte die Dichtungen aufgebracht sind, werden die Stempel der gegenüberliegenden Seite zurückgefahren und die Dichtelemente eingebracht. Während dieses Vorgangs bleiben die Stempel der ersten Seite in Ruhelage und dienen als Gegenlager. Dieses Verfahren ist sowohl bei Bipolarplatten, die auf ihren beiden Seiten sich fluchtend gegenüberliegende Nuten haben, als auch bei Platten, bei denen die gegenüberliegenden Nuten seitlich versetzt zueinander angebracht sind, anwendbar.

### Kurzbeschreibung der Zeichnung

Anhand von zwei Ausführungsbeispielen wird die Erfindung näher erläutert. Es zeigt:
- Figur 1: den prinzipiellen Aufbau des Werkzeugs und
- Figur 2: eine Ausführungsform mit seitlich zueinander versetzten Nuten

### Ausführung der Erfindung

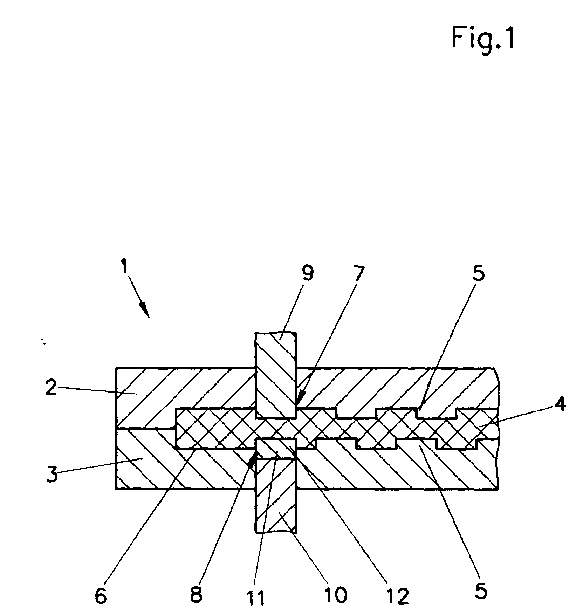

In der Figur 1 ist lediglich ein Seitenrand eines Werkzeugs 1 im Schnitt gezeigt, anhand dessen das Verfahren und die Wirkungsweise des Werkzeugs 1 erläutert werden soll. Das Werkzeug 1 besteht aus den zwei Prägeplatten 2 und 3, die während des Schließvorgangs der nicht näher gezeigten Presse die aus Graphit bestehende Bipolarplatte 4 ausprägen. Die Bipolarplatte 4 ist mit den Kanälen 5 versehen, welche die späteren Flüssigkeits- und Gaskanäle darstellen. In den seitlichen Rand 6 der Bipolarplatte 4 werden die Nuten 7 und 8 für die anzubringenden Dichtelemente eingeprägt. Die Nuten 7 und 8 werden mit Hilfe der Stempel 9 und 10 eingedrückt, die während des Prägevorgangs fest mit den Prägeplatten 2 und 3 verbunden sind. Im oberen Teil der Figur 1 ist in der Prägeplatte 2 der Stempel 9 in seiner Endlage in der Prägeposition eingezeichnet. In der unteren Prägeplatte 3 ist der Stempel 10 bereits zurückgefahren und gibt den Raum 11 für die einzuspritzende oder einzuprägende Dichtmasse 12 frei. Während des Einspritzvorgangs bleibt der Stempel 9 in der eingezeichneten Lage. Nach dem Einspritzvorgang für die Dichtmasse 12 wird der Stempel 9 in eine ähnliche Position zurückgezogen wie sie der Stempel 10 einnimmt und danach wird auch im oberen Bereich der Platte 4 eine Dichtmasse eingebracht. Nachdem beide Dichtelemente 12 in beide Nuten 7 und 8 auf den beiden Seiten der Platte 4 angebracht sind, wird das Werkzeug 1 geöffnet und die fertige mit den Dichtungen 12 versehene Platte 4 herausgenommen.

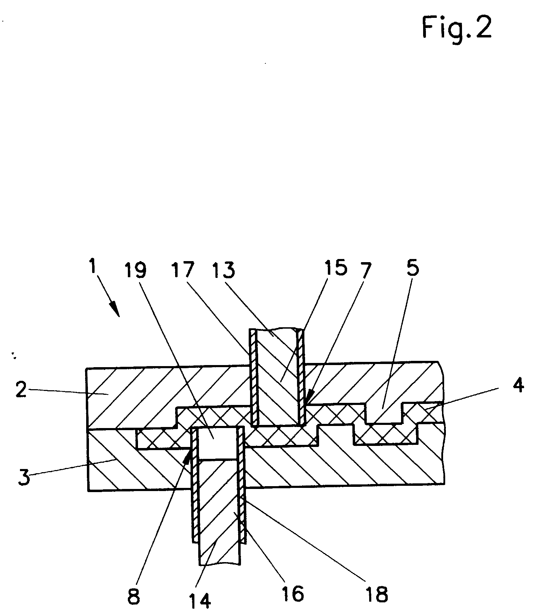

Die Figur 2 zeigt eine Ausbildungsform, bei der die Nuten 7 und 8 seitlich versetzt zueinander angebracht sind. Die Prägeplatten 2 und 3 haben etwa den gleichen Aufbau wie in der Figur 1 und sind mit den Kanälen 5 versehen. Im oberen Teil der Figur ist der Prägestempel 13, wie bereits in Figur 1 beschrieben, in seiner für den Prägevorgang vorgesehenen Endlage eingezeichnet. Er liegt mit seiner Stirnfläche am Nutgrund an. Die Prägestempel 13 und 14 bestehen in diesem Fall jedoch aus zwei Teilen, nämlich den Kernteilen 15 und 16 und den Mantelteilen 17 und 18. Für das Einbringen der Dichtelemente wird bei dieser Ausführungsform lediglich das betreffende Kernteil 15 bzw. 16 ausgefahren, um den Raum 19 für ein Dichtelement 12 freizugeben. In der Figur ist dieses Dichtelement 12 nicht eingezeichnet. Der Mantel 18 bleibt jedoch auf dem Nutgrund stehen, so daß das eingebrachte Dichtelement nicht den gesamten Raum der Nut 8 einnimmt und nach der Entfernung des Mantels 18 ein Freiraum zwischen dem Dichtelement und den seitlichen Nutwänden entsteht. Letzteres wirkt sich besonders günstig auf die Elastizität des Dichtelements aus, da dieses dann beim Zusammenfügen der einzelnen Bipolarplatten eine seitliche Ausweichmöglichkeit hat. Nachdem auf der Unterseite der Platte 4 die Dichtelemente eingebracht sind, wird auf der Oberseite der Platte 4 in gleicher Weise verfahren, nämlich indem zunächst der Kern 15 des Stempels 13 ausgezogen und ein Freiraum für das Dichtelement freigegeben wird, das Dichtelement eingebracht und danach das gesamte Werkzeug 1 zur Entnahme der Platte 4 geöffnet wird. Die Ausführungsform nach der Figur 2 eignet sich besonders gut für Bipolarplatten aus Metallblechen.

In den angeführten Beispielen wurde für das Einbringen der Dichtelemente 12 das Spritzgießverfahren gewählt. Das Werkzeug 1 ist mit entsprechenden Durchlaßöffnungen für die Dichtmasse auszustatten. Es ist aber ohne weiteres auch möglich, die Stempel 9, 10, 13 und 14 völlig aus den Prägeplatten 2 und 3 auszufahren oder eingelegte Stempel herauszunehmen und eine vorgefertigte Dichtung in die Nuten 7 und 8 einzulegen und danach die Stempel wieder einzufahren und die Dichtung an den Platten 4 im Pressverfahren zu formen.

## Patentansprüche

1. Verfahren zur Herstellung von Bipolarplatten mit Flüssigkeits- und Gaskanälen und mit Dichtelementen aus polymerem Material für Brennstoffzellen, **dadurch gekennzeichnet,** daß das Prägen der Bipolarplatten (4) oder das Einprägen der Flüssigkeits- und Gaskanäle (5) in die Bipolarplatten (4) und die Anbringung der Dichtelemente (12) an den Bipolarplatten (4) in einem Werkzeug (1) in zwei aufeinanderfolgenden Schriften durchgeführt wird.

2. Verfahren nach Anspruch 1, dadurch gekennzeichnet, daß die Dichtelemente (12) an die Bipolarplatten (4) angespritzt werden.

3. Verfahren nach Anspruch 1, dadurch gekennzeichnet, daß die Dichtelemente (12) im Pressverfahren mit den Bipolarplatten (4) verbunden werden.

4. Verfahren nach einem der Ansprüche 1 bis 3, dadurch gekennzeichnet, daß die Bipolarplatten (4) mit Nuten (7, 8) für die Dichtelemente (12) versehen sind.

5. Verfahren nach einem der Ansprüche 1 bis 4, dadurch gekennzeichnet, daß die auf einer Bipolarplatte (4) auf ihren beiden Seiten angebrachten und gegenüberliegenden Nuten (7, 8) seitlich versetzt zueinander angebracht sind.

6. Verfahren nach Anspruch 1 bis 4, dadurch gekennzeichnet, daß die auf einer Bipolarplatte (4) auf ihren beiden Seiten angebrachten und sich gegenüberliegenden Nuten (7, 8) fluchtend zueinander angeordnet sind.

7. Werkzeug zur Durchführung des Verfahrens nach einem der Ansprüche 1 bis 6, dadurch gekennzeichnet, daß das Werkzeug (1) ein kombiniertes Präge- und Spritzgießwerkzeug oder Preßwerkzeug ist.

8. Werkzeug nach Anspruch 7, dadurch gekennzeichnet, daß das Werkzeug (1) in den an den Bipolarplatten (4) vorgesehenen Nutbereichen mit gesonderten Stempeln (9, 10, 13, 14) versehen ist, die nach dem Prägevorgang den Raum (11) für die einzubringende Dichtung (12) freigeben.

9. Werkzeug nach Anspruch 8, dadurch gekennzeichnet, daß die Stempel (9, 10, 13, 14) für den Prägevorgang auch für den Preßvorgang benutzt werden.

10. Werkzeug nach Anspruch 7 bis 9, dadurch gekennzeichnet, daß die sich gegenüberliegenden Stempel (9, 10, 13, 14) des Werkzeugs (1) für den Spritz- bzw. Preßvorgang zeitlich nacheinander betätigt werden.
